# EUROPÄISCHE PATENTSCHRIFT

(11) **EP 3 597 887 B1**
(45) Veröffentlichungstag und Bekanntmachung des Hinweises auf die Patenterteilung: **04.09.2024**
(21) Anmeldenummer: 19182984.5
(22) Anmeldetag: 27.06.2019
(51) Int. Cl.: F02C 7/36, F02C 3/107

(54) **GETRIEBEANORDNUNG UND VERFAHREN ZU DEREN HERSTELLUNG**
GEAR ASSEMBLY AND METHOD FOR ITS MANUFACTURE
AGENCEMENT DE BOÎTE DE VITESSE ET SON PROCÉDÉ DE FABRICATION

(30) Priorität: 20.07.2018 DE 102018212160
(43) Veröffentlichungstag der Anmeldung: 22.01.2020
(73) Patentinhaber: Rolls-Royce Deutschland Ltd & Co KG, 15827 Blankenfelde-Mahlow (DE)
(72) Erfinder: SCHWENGLER, Jonas, 15827 Blankenfelde-Mahlow (DE); Dr. KRUEGER, David, 15827 Blankenfelde-Mahlow (DE); NIQUE, Michael, 15827 Blankenfelde-Mahlow (DE)
(74) Vertreter: Maikowski & Ninnemann Patentanwälte Partnerschaft mbB

(56) Entgegenhaltungen:
- US-A- 3 459 072
- US-A- 5 433 674
- US-A1- 2011 130 246
- US-A1- 2016 097 330
- US-A1- 2016 097 331
- US-A1- 2016 376 984
- US-A1- 2017 108 110

## Beschreibung

Die vorliegende Offenbarung bezieht sich auf eine Getriebeanordnung gemäß Anspruch 1, auf ein Gasturbinentriebwerk und auf ein Verfahren zur Herstellung einer Getriebeanordnung gemäß Anspruch 11.

Zur Übertragung von großen Drehmomenten werden regelmäßig Getriebeanordnungen eingesetzt, die ein Planetengetriebe umfassen, das mittels einer Halteeinrichtung an einer tragenden Struktur moniert ist. Planetengetriebe können als Untersetzungsgetriebe eingesetzt werden, z.B. um mittels einer schnell drehenden Welle eines Gasturbinentriebwerks einen Fan mit einer niedrigeren Drehzahl anzutreiben. Dies ermöglicht einen besonders großen Durchmesser des Fans trotz einer hohen Drehzahl einer die Welle antreibenden Turbine.

Um den Belastungen im Betrieb dauerhaft standzuhalten, sind insbesondere Planetengetriebe von Gasturbinentriebwerken entsprechend massiv ausgeführt. Allerdings kann ein hohes Gewicht zu einem erhöhten Treibstoffverbrauch führen, wenn das Gasturbinentriebwerk z.B. in einem Flugzeug eingesetzt wird.

Die US 5,433,674 A1 beschreibt ein Kopplungssystem für ein Planetengetriebe, bei dem eine Kopplung zur Verbindung eines Hohlradgehäuses mit einer externen mechanischen Anbindung einen welligen Querschnitt aufweist.

Weitere Getriebeanordnungen für Gasturbinentriebwerke mit Halteeinrichtungen zur Befestigung eines Hohlrades sind in der US 2016/097331 A1, der US 2016/097330 A1, der US 2011/130246 A1, der US 2017/108110 A1 und der US 2016/376984 A1 beschrieben.

Aufgabe der vorliegenden Erfindung ist es, eine verbesserte Getriebeanordnung mit einem Planetengetriebe zu schaffen.

Gemäß einem Aspekt wird eine Getriebeanordnung für ein Gasturbinentriebwerk bereitgestellt, umfassend ein Planetengetriebe oder Umlaufrädergetriebe und eine Halteeinrichtung. Das Planetengetriebe umfasst zumindest ein Hohlrad und zumindest ein Planetenrad, wobei das Planetenrad beim Abrollen am Hohlrad eine Kraft darauf in Richtung eines Kraftvektors ausübt. Die Halteeinrichtung ist ausgebildet zur Befestigung des zumindest einen Hohlrades an einer anderen Struktur, z.B. einer stationären Stützstruktur des Gasturbinentriebwerks. Dabei ist vorgesehen, dass die Halteeinrichtung einen ersten Abschnitt und einen zweiten Abschnitt umfasst, wobei sich der erste Abschnitt in axialer Richtung auf einer Seite des (resultierenden) Kraftvektors und/oder einer geraden Verlängerung davon erstreckt (insbesondere ausschließlich) und sich der zweite Abschnitt auf der anderen Seite des Kraftvektors und/oder der geraden Verlängerung davon erstreckt (insbesondere ausschließlich). Insbesondere kann vorgesehen sein, dass sich der erste Abschnitt in einer Querschnittsfläche entlang einer Mittelachse des Hohlrades auf der einen Seite des auf die Querschnittsfläche projizierten Kraftvektors und/oder einer geraden Verlängerung davon erstreckt, der zweite Abschnitt auf der anderen Seite. Der erste Abschnitt weist ein Ende auf, an dem der erste Abschnitt mit einem Ende des zweiten Abschnitts verbunden ist, sodass der erste Abschnitt das zumindest eine Hohlrad mit dem zweiten Abschnitt verbindet und über den zweiten Abschnitt mit der anderen Struktur verbunden oder verbindbar ist.

Eine derartig ausgebildete Getriebeanordnung ist insbesondere dahingehend verbessert, dass eine besonders ausgeglichene Belastung des Hohlrades durch die Planetenräder möglich ist. Hierdurch werden das Hohlrad und die Planetenräder gleichmäßig belastet und die Zahnbeanspruchung kann verringert werden. Dies ermöglicht eine erhöhte Lebensdauer und/oder ein verringertes Gewicht.

Der erste und der zweite Abschnitt weisen (insbesondere in Bezug auf die Querschnittsfläche entlang der Mittelachse des Hohlrades und/oder um eine zum Radius und zur Mittelachse des Hohlrades senkrechte Achse) jeweils eine Drehsteifigkeit auf, wobei das Verhältnis dieser Drehsteifigkeiten 1,0 +/- 0,1 beträgt, insbesondere 1,0 +/- 0,05, insbesondere 1,0. Die Drehsteifigkeiten können also gleich oder im Wesentlichen gleich sein. Hierdurch ist es möglich, dass eine elastische Verformung des Hohlrades infolge der durch das Planetenrad ausgeübten Kraft nur in radialer Richtung erfolgt, nicht oder nur unwesentlich in axialer Richtung. Dies ermöglicht eine besonders gleichmäßige Belastung.

Das Planetengetriebe kann eine Schrägverzahnung aufweisen, insbesondere eine doppelte Schrägverzahnung, z.B. eine Pfeilverzahnung. Alternativ ist jedoch auch eine Geradverzahnung denkbar. Ein schrägverzahntes Hohlrad eines Planetengetriebes erfährt Kräfte, die im Querschnitt zu einem Verkippen des Hohlrades führen könnten. Hierdurch wären die Zähne der Planetenräder und des Hohlrades nicht optimal aufeinander ausgerichtet, woraus eine erhöhte Zahnbelastung folgen könnte. Insbesondere in Kombination mit den gleichen oder im Wesentlichen gleichen Drehsteifigkeiten des ersten und des zweiten Abschnitts der Halteeinrichtung kann einem solchen Verkippen entgegengewirkt werden.

Optional ist das Planetengetriebe derart doppelt schrägverzahnt, dass Axialkräfte beim Abrollen des zumindest einen Planetenrades am Hohlrad nach außen gerichtet sind. Hierdurch kann z.B. Schmiermittel einfach herausgedrückt werden.

Die Halteeinrichtung kann zur Lastenentkopplung eine flexible Aufhängung des Hohlrades bereitstellen. Die flexible Aufhängung ermöglicht z.B. bei Lastwechseln eine Bewegbarkeit des Planetengetriebes relativ zur anderen Struktur, z.B. der stationären Stützstruktur des Gasturbinentriebwerks.

Optional sind der erste und der zweite Abschnitt einstückig miteinander ausgebildet, alternativ dazu mehrstückig und aneinander befestigt.

Der erste und der zweite Abschnitt können unterschiedliche Materialstärken aufweisen und/oder aus unterschiedlichen Materialien hergestellt sein. Hierdurch ist es möglich (z.B. je nach Lage des Kraftvektors), trotz optional unterschiedlicher Längen des ersten und zweiten Abschnitts, gleiche oder im Wesentlichen gleiche Drehsteifigkeiten zu erzielen.

Ein Aspekt betrifft ein Triebwerk, insbesondere für ein Luftfahrzeug, umfassend eine Kernwelle, einen Fan mit mehreren Fanschaufeln; und zumindest eine Getriebeanordnung nach einer beliebigen, hierin beschriebenen Ausgestaltung mit einem Planetengetriebe, das von der Kernwelle antreibbar ist, wobei der Fan mittels des Planetengetriebes mit einer niedrigeren Drehzahl als die Kernwelle antreibbar ist. Bei dem Triebwerk handelt es sich z.B. um ein Gasturbinentriebwerk oder um ein elektrisch angetriebenes Triebwerk (z.B. ein e-Fan).

Ein Aspekt betrifft ein Gasturbinentriebwerk für ein Luftfahrzeug, umfassend ein Kerntriebwerk, das eine Turbine, einen Verdichter und eine die Turbine mit dem Verdichter verbindende Kernwelle umfasst; einen Fan, der stromaufwärts des Kerntriebwerks positioniert ist, wobei der Fan mehrere Fanschaufeln umfasst; und eine Getriebeanordnung nach einer beliebigen, hierin beschriebenen Ausgestaltung, mit einem Planetengetriebe, das von der Kernwelle antreibbar ist, wobei der Fan mittels des Planetengetriebes mit einer niedrigeren Drehzahl als die Kernwelle antreibbar ist.

Bei dem Gasturbinentriebwerk kann die Turbine eine erste Turbine sein, der Verdichter ein erster Verdichter sein und die Kernwelle eine erste Kernwelle sein. Optional umfasst das Kerntriebwerk ferner eine zweite Turbine, einen zweiten Verdichter und eine zweite Kernwelle, die die zweite Turbine mit dem zweiten Verdichter verbindet, umfasst; und die zweite Turbine, der zweite Verdichter und die zweite Kernwelle dahingehend angeordnet sind, sich mit einer höheren Drehzahl als die erste Kernwelle zu drehen.

Wie hier an anderer Stelle angeführt wird, kann sich die vorliegende Offenbarung auf ein Gasturbinentriebwerk, z.B. ein Flugzeugtriebwerk, beziehen. Solch ein Gasturbinentriebwerk kann ein Kerntriebwerk umfassen, das eine Turbine, eine Brennervorrichtung, einen Verdichter und eine die Turbine mit dem Verdichter verbindende Kernwelle umfasst. Solch ein Gasturbinentriebwerk kann einen Fan (mit Fanschaufeln) umfassen, der stromaufwärts des Kerntriebwerks positioniert ist.

Das Gasturbinentriebwerk kann ein Planetengetriebe umfassen, das über die Kernwelle angetrieben wird und dessen Abtrieb den Fan so antreibt, dass er eine niedrigere Drehzahl als die Kernwelle aufweist. Der Eingang für das Planetengetriebe kann direkt von der Kernwelle oder indirekt über die Kernwelle, beispielsweise über eine Stirnwelle und/oder ein Stirnzahnrad, erfolgen. Die Kernwelle kann mit der Turbine und dem Verdichter starr verbunden sein, so dass sich die Turbine und der Verdichter mit derselben Drehzahl drehen (wobei sich der Fan mit einer niedrigeren Drehzahl dreht).

Das Gasturbinentriebwerk, das hier beschrieben und/oder beansprucht wird, kann eine beliebige geeignete allgemeine Architektur aufweisen. Beispielsweise kann das Gasturbinentriebwerk eine beliebige gewünschte Anzahl an Wellen aufweisen, die Turbinen und Verdichter verbinden, beispielsweise eine, zwei oder drei Wellen. Lediglich beispielhaft kann die mit der Kernwelle verbundene Turbine eine erste Turbine sein, der mit der Kernwelle verbundene Verdichter kann ein erster Verdichter sein und die Kernwelle kann eine erste Kernwelle sein. Das Kerntriebwerk kann ferner eine zweite Turbine, einen zweiten Verdichter und eine zweite Kernwelle, die die zweite Turbine mit dem zweiten Verdichter verbindet, umfassen. Die zweite Turbine, der zweite Verdichter und die zweite Kernwelle können dahingehend angeordnet sein, sich mit einer höheren Drehzahl als die erste Kernwelle zu drehen.

Bei einer solchen Anordnung kann der zweite Verdichter axial stromabwärts des ersten Verdichters positioniert sein. Der zweite Verdichter kann dahingehend angeordnet sein, eine Strömung von dem ersten Verdichter aufzunehmen (beispielsweise direkt aufzunehmen, beispielsweise über einen generell ringförmigen Kanal).

Das Planetengetriebe kann dahingehend ausgebildet sein, dass es von der Kernwelle angetrieben wird, die dazu konfiguriert ist, sich (beispielsweise im Gebrauch) mit der niedrigsten Drehzahl zu drehen (beispielsweise die erste Kernwelle in dem obigen Beispiel). Beispielsweise kann das Planetengetriebe dahingehend ausgebildet sein, dass es lediglich von der Kernwelle angetrieben wird, die dazu konfiguriert ist, sich (beispielsweise im Gebrauch) mit der niedrigsten Drehzahl zu drehen (beispielsweise nur von der ersten Kernwelle und nicht der zweiten Kernwelle bei dem obigen Beispiel). Alternativ dazu kann das Planetengetriebe dahingehend ausgebildet sein, dass es von einer oder mehreren Wellen angetrieben wird, beispielsweise der ersten und/oder der zweiten Welle in dem obigen Beispiel.

Bei einem Gasturbinentriebwerk, das hier beschrieben und/oder beansprucht wird, kann eine Brennvorrichtung axial stromabwärts des Fans und des Verdichters (oder der Verdichter) vorgesehen sein. Beispielsweise kann die Brennervorrichtung direkt stromabwärts des zweiten Verdichters (beispielsweise an dessen Ausgang) liegen, wenn ein zweiter Verdichter vorgesehen ist. Als ein weiteres Beispiel kann die Strömung am Ausgang des Verdichters dem Einlass der zweiten Turbine zugeführt werden, wenn eine zweite Turbine vorgesehen ist. Die Brennervorrichtung kann stromaufwärts der Turbine (der Turbinen) vorgesehen sein.

Der oder jeder Verdichter (beispielsweise der erste Verdichter und der zweite Verdichter gemäß obiger Beschreibung) kann eine beliebige Anzahl an Stufen, beispielsweise mehrere Stufen, umfassen. Jede Stufe kann eine Reihe von Rotorschaufeln und eine Reihe von Statorschaufeln umfassen, bei denen es sich um variable Statorschaufeln handeln kann (d.h. der Anstellwinkel kann variabel sein). Die Reihe von Rotorschaufeln und die Reihe von Statorschaufeln können axial zueinander versetzt sein.

Die oder jede Turbine (beispielsweise die erste Turbine und die zweite Turbine gemäß obiger Beschreibung) kann eine beliebige Anzahl an Stufen, beispielsweise mehrere Stufen, umfassen. Jede Stufe kann eine Reihe von Rotorschaufeln und eine Reihe von Statorschaufeln umfassen. Die Reihe von Rotorschaufeln und die Reihe von Statorschaufeln können axial zueinander versetzt sein.

Jede Fanschaufel kann eine radiale Spannweite aufweisen, die sich von einem Fuß (oder einer Nabe) an einer radial innenliegenden, von Gas überströmten Stelle oder sich von einer Position einer Spannweite von 0 % zu einer Spitze mit einer Spannweite von 100 % erstreckt. Das Verhältnis des Radius der Fanschaufel an der Nabe zu dem Radius der Fanschaufel an der Spitze kann bei weniger als (oder in der Größenordnung von): 0,4, 0,39, 0,38, 0,37, 0,36, 0,35, 0,34, 0,33, 0,32, 0,31, 0,3, 0,29, 0,28, 0,27, 0,26 oder 0,25 liegen. Das Verhältnis des Radius der Fanschaufel an der Nabe zu dem Radius der Fanschaufel an der Spitze kann in einem abgeschlossenen Bereich liegen, der von zwei Werten im vorhergehenden Satz begrenzt wird (d. h. die Werte können obere oder untere Grenzen bilden). Diese Verhältnisse können allgemeinhin als das Nabe-Spitze-Verhältnis bezeichnet werden. Der Radius an der Nabe und der Radius an der Spitze können beide an der vorderen Kante (oder der axial am weitesten vorne liegenden Kante) der Schaufel gemessen werden. Das Nabe-Spitze-Verhältnis bezieht sich natürlich auf den von Gas überströmten Abschnitt der Fanschaufel, d. h. den Abschnitt, der sich radial außerhalb jeglicher Plattform befindet.

Der Radius des Fans kann zwischen der Mittellinie des Triebwerks und der Spitze der Fanschaufel an ihrer vorderen Kante gemessen werden. Der Durchmesser des Fans (der allgemein das Doppelte des Radius des Fans sein kann) kann größer als (oder in der Größenordnung von): 250 cm (etwa 100 Inch), 260 cm, 270 cm (etwa 105 Inch), 280 cm (etwa 110 Inch), 290 cm (etwa 115 Inch), 300 cm (etwa 120 Inch), 310 cm, 320 cm (etwa 125 Inch), 330 cm (etwa 130 Inch), 340 cm (etwa 135 Inch), 350 cm, 360 cm (etwa 140 Inch), 370 cm (etwa 145 Inch), 380 cm (etwa 150 Inch) oder 390 cm (etwa 155 Inch) sein (liegen). Der Fandurchmesser kann in einem abgeschlossenen Bereich liegen, der von zwei der Werte im vorhergehenden Satz begrenzt wird (d. h. die Werte können obere oder untere Grenzen bilden).

Die Drehzahl des Fans kann im Betrieb variieren. Allgemein ist die Drehzahl geringer für Fans mit einem größeren Durchmesser. Lediglich als ein nicht einschränkendes Beispiel kann die Drehzahl des Fans bei Konstantgeschwindigkeitsbedingungen weniger als 2500 U/min, beispielsweise weniger als 2300 U/min, betragen. Lediglich als ein weiteres nicht einschränkendes Beispiel kann auch die Drehzahl des Fans bei Konstantgeschwindigkeitsbedingungen für ein Triebwerk mit einem Fandurchmesser im Bereich von 250 cm bis 300 cm (beispielsweise 250 cm bis 280 cm) im Bereich von 1700 U/min bis 2500 U/min, beispielsweise im Bereich von 1800 U/min bis 2300 U/min, beispielsweise im Bereich von 1900 U/min bis 2100 U/min, liegen. Lediglich als ein weiteres nicht einschränkendes Beispiel kann die Drehzahl des Fans bei Konstantgeschwindigkeitsbedingungen für ein Triebwerk mit einem Fandurchmesser im Bereich von 320 cm bis 380 cm in dem Bereich von 1200 U/min bis 2000 U/min, beispielsweise in dem Bereich von 1300 U/min bis 1800 U/min, beispielsweise in dem Bereich von 1400 U/min bis 1600 U/min, liegen.

Im Gebrauch des Gasturbinentriebwerks dreht sich der Fan (mit zugehörigen Fanschaufeln) um eine Drehachse. Diese Drehung führt dazu, dass sich die Spitze der Fanschaufel mit einer Geschwindigkeit U_{Spitze} bewegt. Die von den Fanschaufeln an der Strömung verrichtete Arbeit resultiert in einem Anstieg der Enthalpie dH der Strömung. Eine Fanspitzenbelastung kann als dH/U_{Spitze}² definiert werden, wobei dH der Enthalpieanstieg (beispielsweise der durchschnittliche 1-D-Enthalpieanstieg) über den Fan hinweg ist und U_{Spitze} die (Translations-) Geschwindigkeit der Fanspitze, beispielsweise an der vorderen Kante der Spitze, ist (die als Fanspitzenradius am vorderen Rand multipliziert mit der Winkelgeschwindigkeit definiert werden kann). Die Fanspitzenbelastung bei Konstantgeschwindigkeitsbedingungen kann mehr als (oder in der Größenordnung von): 0,3, 0,31, 0,32, 0,33, 0,34, 0,35, 0,36, 0,37, 0,38, 0,39 oder 0,4 betragen (liegen) (wobei alle Einheiten in diesem Abschnitt Jkg⁻¹K⁻¹/(ms⁻¹)² sind). Die Fanspitzenbelastung kann in einem abgeschlossenen Bereich liegen, der von zwei der Werte im vorhergehenden Satz begrenzt wird (d. h. die Werte können obere oder untere Grenzen bilden).

Gasturbinentriebwerke gemäß der vorliegenden Offenbarung können ein beliebiges gewünschtes Bypassverhältnis aufweisen, wobei das Bypassverhältnis als das Verhältnis des Massendurchsatzes der Strömung durch den Bypasskanal zu dem Massendurchsatz der Strömung durch den Kern bei Konstantgeschwindigkeitsbedingungen definiert wird. Bei einigen Anordnungen kann das Bypassverhältnis mehr als (oder in der Größenordnung von): 10, 10,5, 11, 11,5, 12, 12,5, 13, 13,5, 14, 14,5, 15, 15,5, 16, 16,5 oder 17 betragen (liegen). Das Bypassverhältnis kann in einem abgeschlossenen Bereich liegen, der von zwei der Werte im vorhergehenden Satz begrenzt wird (d. h. die Werte können obere oder untere Grenzen bilden). Der Bypasskanal kann im Wesentlichen ringförmig sein. Der Bypasskanal kann sich radial außerhalb des Kerntriebwerks befinden. Die radial äußere Fläche des Bypasskanals kann durch eine Triebwerksgondel und/oder ein Fangehäuse definiert werden.

Das Gesamtdruckverhältnis eines Gasturbinentriebwerks, das hier beschrieben und/oder beansprucht wird, kann als das Verhältnis des Staudrucks stromaufwärts des Fans zu dem Staudruck am Ausgang des Höchstdruckverdichters (vor dem Eingang in die Brennervorrichtung) definiert werden. Als ein nicht einschränkendes Beispiel kann das Gesamtdruckverhältnis eines Gasturbinentriebwerks, das hier beschrieben und/oder beansprucht wird, bei Konstantgeschwindigkeit mehr als (oder in der Größenordnung von): 35, 40, 45, 50, 55, 60, 65, 70, 75 betragen (liegen). Das Gesamtdruckverhältnis kann in einem abgeschlossenen Bereich liegen, der von zwei der Werte im vorhergehenden Satz begrenzt wird (d. h. die Werte können obere oder untere Grenzen bilden).

Der spezifische Schub eines Triebwerks kann als der Nettoschub des Triebwerks dividiert durch den Gesamtmassenstrom durch das Triebwerk hindurch definiert werden. Bei Konstantgeschwindigkeitsbedingungen kann der spezifische Schub eines Triebwerks, das hier beschrieben und/oder beansprucht wird, weniger als (oder in der Größenordnung von): 110 N kg⁻¹s, 105 Nkg⁻¹s, 100 Nkg⁻¹s, 95 Nkg⁻¹s, 90 Nkg⁻¹s, 85 Nkg⁻¹s oder 80 Nkg⁻¹s betragen (liegen). Der spezifische Schub kann in einem abgeschlossenen Bereich liegen, der von zwei der Werte im vorhergehenden Satz begrenzt wird (d. h. die Werte können obere oder untere Grenzen bilden). Solche Triebwerke können im Vergleich zu herkömmlichen Gasturbinentriebwerken besonders effizient sein.

Ein Gasturbinentriebwerk, das hier beschrieben und/oder beansprucht wird, kann einen beliebigen gewünschten Höchstschub aufweisen. Lediglich als ein nicht einschränkendes Beispiel kann eine Gasturbine, die hier beschrieben und/oder beansprucht wird, zur Erzeugung eines Höchstschubs von mindestens (oder in der Größenordnung von): 160 kN, 170 kN, 180 kN, 190 kN, 200 kN, 250 kN, 300 kN, 350 kN, 400 kN, 450 kN, 500 kN oder 550kN in der Lage sein. Der Höchstschub kann in einem abgeschlossenen Bereich liegen, der von zwei der Werte im vorhergehenden Satz begrenzt wird (d. h. die Werte können obere oder untere Grenzen bilden). Der Schub, auf den oben Bezug genommen wird, kann der Nettohöchstschub bei standardmäßigen atmosphärischen Bedingungen auf Meereshöhe plus 15 °C (Umgebungsdruck 101,3 kPa, Temperatur 30 °C) bei statischem Triebwerk sein.

Im Gebrauch kann die Temperatur der Strömung am Eingang der Hochdruckturbine besonders hoch sein. Diese Temperatur, die als TET bezeichnet werden kann, kann an dem Ausgang zur Brennvorrichtung, beispielsweise unmittelbar stromaufwärts der ersten Turbinenschaufel, die wiederum als eine Düsenleitschaufel bezeichnet werden kann, gemessen werden. Bei Konstantgeschwindigkeit kann die TET mindestens (oder in der Größenordnung von): 1400 K, 1450 K, 1500 K, 1550 K, 1600 K oder 1650 K betragen (liegen). Die TET bei Konstantgeschwindigkeit kann in einem abgeschlossenen Bereich liegen, der von zwei der Werte im vorhergehenden Satz begrenzt wird (d. h. die Werte können obere oder untere Grenzen bilden). Die maximale TET im Gebrauch des Triebwerks kann beispielsweise mindestens (oder in der Größenordnung von): 1700 K, 1750 K, 1800 K, 1850 K, 1900 K, 1950 K oder 2000 K betragen (liegen). Die maximale TET kann in einem abgeschlossenen Bereich liegen, der von zwei der Werte im vorhergehenden Satz begrenzt wird (d. h. die Werte können obere oder untere Grenzen bilden). Die maximale TET kann beispielsweise bei einer Bedingung von hohem Schub, beispielsweise bei einer MTO-Bedingung (MTO - Maximum Take-Off thrust - maximaler Startschub), auftreten.

Eine Fanschaufel und/oder ein Blattabschnitt (aerofoil) einer Fanschaufel, die hier beschrieben und/oder beansprucht wird, kann aus einem beliebigen geeigneten Material oder einer Kombination aus Materialien hergestellt werden. Beispielsweise kann zumindest ein Teil der Fanschaufel und/oder des Blatts zumindest zum Teil aus einem Verbundstoff, beispielsweise einem Metallmatrix-Verbundstoff und/oder einem Verbundstoff mit organischer Matrix, wie z. B. Kohlefaser, hergestellt werden. Als ein weiteres Beispiel kann zumindest ein Teil der Fanschaufel und/oder des Blatts zumindest zum Teil aus einem Metall, wie z. B. einem auf Titan basierendem Metall oder einem auf Aluminium basierenden Material (wie z. B. einer Aluminium-Lithium-Legierung) oder einem auf Stahl basierenden Material hergestellt werden. Die Fanschaufel kann mindestens zwei Bereiche umfassen, die unter Verwendung verschiedener Materialien hergestellt werden. Beispielsweise kann die Fanschaufel eine vordere Schutzkante aufweisen, die unter Verwendung eines Materials hergestellt wird, das dem Aufschlagen (beispielsweise von Vögeln, Eis oder anderem Material) besser widerstehen kann als der Rest der Schaufel. Solch eine vordere Kante kann beispielsweise unter Verwendung von Titan oder einer auf Titan basierenden Legierung hergestellt werden. Somit kann die Fanschaufel lediglich als ein Beispiel einen auf Kohlefaser oder Aluminium basierenden Körper (wie z. B. eine Aluminium-Lithium-Legierung) mit einem vorderen Rand aus Titan aufweisen.

Ein Fan, der hier beschrieben und/oder beansprucht wird, kann einen mittleren Abschnitt umfassen, von dem sich die Fanschaufeln, beispielsweise in einer radialen Richtung, erstrecken können. Die Fanschaufeln können auf beliebige gewünschte Art und Weise an dem mittleren Abschnitt angebracht sein. Beispielsweise kann jede Fanschaufel eine Fixierungsvorrichtung umfassen, die mit einem entsprechenden Schlitz in der Nabe (oder Scheibe) in Eingriff gelangen kann. Lediglich als ein Beispiel kann solch eine Fixierungsvorrichtung in Form eines Schwalbenschwanzes vorliegen, der zur Fixierung der Fanschaufel an der Nabe/Scheibe in einen entsprechenden Schlitz in der Nabe/Scheibe eingesteckt und/oder damit in Eingriff gebracht werden kann. Als ein weiteres Beispiel können die Fanschaufeln integral mit einem mittleren Abschnitt ausgebildet sein. Solch eine Anordnung kann als eine Blisk oder ein Bling bezeichnet werden. Ein beliebiges geeignetes Verfahren kann zur Herstellung solch einer Blisk oder solch eines Bling verwendet werden. Beispielsweise kann zumindest ein Teil der Fanschaufeln aus einem Block maschinell herausgearbeitet werden und/oder mindestens ein Teil der Fanschaufeln kann durch Schweißen, wie z. B. lineares Reibschweißen, an der Nabe/Scheibe angebracht werden.

Die Gasturbinentriebwerke, die hier beschrieben und/oder beansprucht werden, können oder können nicht mit einer VAN (Variable Area Nozzle - Düse mit variablem Querschnitt) versehen sein. Solch eine Düse mit variablem Querschnitt kann im Betrieb eine Variation des Ausgangsquerschnitts des Bypasskanals erlauben. Die allgemeinen Prinzipien der vorliegenden Offenbarung können auf Triebwerke mit oder ohne eine VAN zutreffen.

Der Fan einer Gasturbine, die hier beschrieben und/oder beansprucht wird, kann eine beliebige gewünschte Anzahl an Fanschaufeln, beispielsweise 16, 18, 20 oder 22 Fanschaufeln, aufweisen.

Gemäß der hier erfolgenden Verwendung können Konstantgeschwindigkeitsbedingungen die Konstantgeschwindigkeitsbedingungen eines Luftfahrzeugs, an dem das Gasturbinentriebwerk angebracht ist, bedeuten. Solche Konstantgeschwindigkeitsbedingungen können herkömmlicherweise als die Bedingungen während des mittleren Teils des Flugs definiert werden, beispielsweise die Bedingungen, denen das Luftfahrzeug und/oder das Triebwerk zwischen (hinsichtlich Zeit und/oder Entfernung) dem Ende des Steigflugs und dem Beginn des Sinkflugs ausgesetzt wird bzw. werden.

Lediglich als ein Beispiel kann die Vorwärtsgeschwindigkeit bei der Konstantgeschwindigkeitsbedingung bei einem beliebigen Punkt im Bereich von Mach 0,7 bis 0,9, beispielsweise 0,75 bis 0,85, beispielsweise 0,76 bis 0,84, beispielsweise 0,77 bis 0,83, beispielsweise 0,78 bis 0,82, beispielsweise 0,79 bis 0,81, beispielsweise in der Größenordnung von Mach 0,8, in der Größenordnung von Mach 0,85 oder in dem Bereich von 0,8 bis 0,85 liegen. Eine beliebige Geschwindigkeit innerhalb dieser Bereiche kann die Konstantgeschwindigkeitsbedingung sein. Bei einigen Luftfahrzeugen können die Konstantgeschwindigkeitsbedingung außerhalb dieser Bereiche, beispielsweise unter Mach 0,7 oder über Mach 0,9, liegen.

Lediglich als ein Beispiel können die Konstantgeschwindigkeitsbedingungen standardmäßigen atmosphärischen Bedingungen bei einer Höhe entsprechen, die im Bereich von 10.000 m bis 15.000 m, beispielsweise im Bereich von 10.000 m bis 12.000 m, beispielsweise im Bereich von 10.400 m bis 11.600 m (etwa 38.000 Fuß) beispielsweise im Bereich von 10.500 m bis 11.500 m, beispielsweise im Bereich von 10.600 m bis 11.400 m, beispielsweise im Bereich von 10.700 m (etwa 35.000 Fuß) bis 11.300 m, beispielsweise im Bereich von 10.800 m bis 11.200 m, beispielsweise im Bereich von 10.900 m bis 11.100 m, beispielsweise in der Größenordnung von 11.000 m, liegt. Die Konstantgeschwindigkeitsbedingungen können standardmäßigen atmosphärischen Bedingungen bei einer beliebigen gegebenen Höhe in diesen Bereichen entsprechen.

Lediglich als ein Beispiel können die Konstantgeschwindigkeitsbedingungen Folgendem entsprechen: einer Vorwärts-Mach-Zahl von 0,8; einem Druck von 23.000 Pa und einer Temperatur von -55 °C.

So wie sie hier durchweg verwendet werden, können "Konstantgeschwindigkeit" oder "Konstantgeschwindigkeitsbedingungen" den aerodynamischen Auslegungspunkt bedeuten. Solch ein aerodynamischer Auslegungspunkt (oder ADP - Aerodynamic Design Point) kann den Bedingungen (darunter beispielsweise die Mach-Zahl, Umgebungsbedingungen und Schubanforderung), für die der Fanbetrieb ausgelegt ist, entsprechen. Dies kann beispielsweise die Bedingungen, bei denen der Fan (oder das Gasturbinentriebwerk) konstruktionsgemäß den optimalen Wirkungsgrad aufweist, bedeuten. Im Betrieb kann ein Gasturbinentriebwerk, das hier beschrieben und/oder beansprucht wird, bei den Konstantgeschwindigkeitsbedingungen, die hier an anderer Stelle definiert werden, betrieben werden. Solche Konstantgeschwindigkeitsbedingungen können von den Konstantgeschwindigkeitsbedingungen (beispielsweise den Bedingungen während des mittleren Teils des Fluges) eines Luftfahrzeugs, an dem mindestens ein (beispielsweise zwei oder vier) Gasturbinentriebwerk(e) zur Bereitstellung von Schubkraft befestigt sein kann, bestimmt werden.

Gemäß einem Aspekt wird ein Verfahren zur Herstellung einer Getriebeanordnung für ein Gasturbinentriebwerk bereitgestellt, insbesondere einer Getriebeanordnung nach einer beliebigen, hierin beschriebenen Ausgestaltung. Das Verfahren umfasst die folgenden Schritte (optional, aber nicht zwingend in dieser Reihenfolge): Bereitstellen eines Planetengetriebes mit zumindest einem Hohlrad und zumindest einem Planetenrad, das beim Abrollen am Hohlrad darauf eine Kraft in Richtung eines Kraftvektors ausübt; und Montieren einer Halteeinrichtung zur Befestigung des zumindest einen Hohlrades an einer anderen Struktur derart am zumindest einen Hohlrad, dass sich ein erster Abschnitt der Halteeinrichtung in axialer Richtung auf einer Seite des Kraftvektors und/oder einer geraden Verlängerung davon erstreckt, und ein zweiter Abschnitt der Halteeinrichtung sich in axialer Richtung auf der anderen Seite des Kraftvektors und/oder der geraden Verlängerung davon erstreckt, wobei der erste und der zweite Abschnitt jeweils eine Drehsteifigkeit aufweist, wobei das Verhältnis dieser Drehsteifigkeiten 1,0 +/- 0,1 beträgt.

Optional umfasst das Verfahren ferner folgenden Schritt: Ermitteln einer Geometrie, insbesondere von Materialstärken, und/oder von Materialeigenschaften des ersten und des zweiten Abschnitts in einer Optimierungsprozedur. Hierbei können z.B. Lage und Abstand zwischen dem Hohlrad und der anderen Struktur und/oder auf das zumindest eine Planetenrad einwirkende Drehmomente vorgegeben werden.

Optional umfasst die Optimierungsprozedur einen FEM-Algorithmus. Dies ermöglicht eine besonders effiziente Berechnung und präzise Resultate.

In einer Ausgestaltung erfolgt die Optimierungsprozedur iterativ.

Für den Fachmann ist verständlich, dass ein Merkmal oder Parameter, das bzw. der in Bezug auf einen der obigen Aspekte beschrieben wird, bei einem beliebigen anderen Aspekt angewendet werden kann, sofern sie sich nicht gegenseitig ausschließen. Des Weiteren kann ein beliebiges Merkmal oder ein beliebiger Parameter, das bzw. der hier beschrieben wird, bei einem beliebigen Aspekt angewendet werden und/oder mit einem beliebigen anderen Merkmal oder Parameter, das bzw. der hier beschrieben wird, kombiniert werden, sofern sie sich nicht gegenseitig ausschließen.

Es werden nun beispielhaft Ausführungsformen mit Bezug auf die Figuren beschrieben; in den Figuren zeigen:
- Figur 1: eine Seitenschnittansicht eines Gasturbinentriebwerks;
- Figur 2: eine Seitenschnittgroßansicht eines stromaufwärtigen Abschnitts des Gasturbinentriebwerks mit einer Getriebeanordnung mit einem Planetengetriebe;
- Figur 3: das Planetengetriebe des Gasturbinentriebwerks mit einem Hohlrad, mehreren Planetenrädern und einem Sonnenrad;
- Figur 4: eine Schnittansicht des Hohlrades des Planetengetriebes und einer Halteeinrichtung;
- Figur 5: Verformungen der Halteeinrichtung gemäß Figur 4 infolge einer Krafteinwirkung durch ein Planetenrad;
- Figur 6A und 6B: Ansichten der Verzahnung des Hohlrades des Planetengetriebes; und
- Figur 7: ein Verfahren zur Herstellung einer Getriebeanordnung.

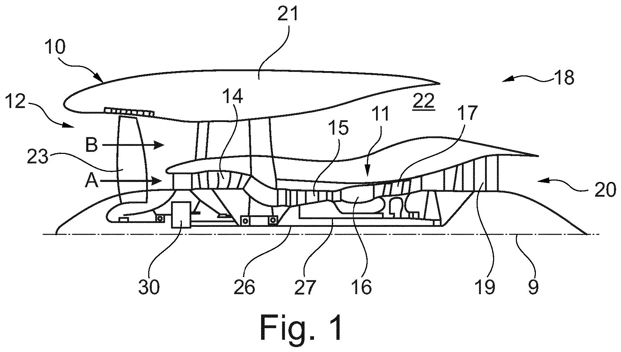

Figur 1 stellt ein Gasturbinentriebwerk 10 mit einer Hauptdrehachse 9 dar. Das Gasturbinentriebwerk 10 umfasst einen Lufteinlass 12 und ein Fan 23, der zwei Luftströme erzeugt: einen Kernluftstrom A und einen Bypassluftstrom B. Das Gasturbinentriebwerk 10 umfasst einen Kern 11, der den Kernluftstrom A aufnimmt. Das Kerntriebwerk 11 umfasst in Axialströmungsreihenfolge einen Niederdruckverdichter 14, einen Hochdruckverdichter 15, eine Verbrennungseinrichtung 16, eine Hochdruckturbine 17, eine Niederdruckturbine 19 und eine Kernschubdüse 20. Eine Triebwerksgondel 21 umgibt das Gasturbinentriebwerk 10 und definiert einen Bypasskanal 22 und eine Bypassschubdüse 18. Der Bypassluftstrom B strömt durch den Bypasskanal 22. Der Fan 23 ist über eine Welle 26 und ein epizyklisches Planetengetriebe 30 an der Niederdruckturbine 19 angebracht und wird durch diese angetrieben.

Im Betrieb wird der Kernluftstrom A durch den Niederdruckverdichter 14 beschleunigt und verdichtet und in den Hochdruckverdichter 15 geleitet, wo eine weitere Verdichtung erfolgt. Die aus dem Hochdruckverdichter 15 ausgestoßene verdichtete Luft wird in die Verbrennungseinrichtung 16 geleitet, wo sie mit Kraftstoff vermischt wird und das Gemisch verbrannt wird. Die resultierenden heißen Verbrennungsprodukte breiten sich dann durch die Hochdruck- und die Niederdruckturbine 17, 19 aus und treiben diese dadurch an, bevor sie zur Bereitstellung einer gewissen Schubkraft durch die Düse 20 ausgestoßen werden. Die Hochdruckturbine 17 treibt den Hochdruckverdichter 15 durch eine geeignete Verbindungswelle 27 an. Der Fan 23 stellt allgemein den Hauptteil der Schubkraft bereit. Das epizyklische Planetengetriebe 30 ist ein Untersetzungsgetriebe.

Es wird angemerkt, dass die Begriffe "Niederdruckturbine" und "Niederdruckverdichter", so wie sie hier verwendet werden, so aufgefasst werden können, dass sie die Turbinenstufe mit dem niedrigsten Druck bzw. die Verdichterstufe mit dem niedrigsten Druck (d. h. dass sie nicht den Fan 23 umfassen) und/oder die Turbinen- und Verdichterstufe, die durch die verbindende Welle 26 mit der niedrigsten Drehzahl in dem Triebwerk (d. h. dass sie nicht die Getriebeausgangswelle, die den Fan 23 antreibt, umfasst) miteinander verbunden sind, bedeuten. In einigen Schriften können die "Niederdruckturbine" und der "Niederdruckverdichter", auf die hier Bezug genommen wird, alternativ dazu als die "Mitteldruckturbine" und "Mitteldruckverdichter" bekannt sein. Bei der Verwendung derartiger alternativer Nomenklatur kann der Fan 23 als eine erste Verdichtungsstufe oder Verdichtungsstufe mit dem niedrigsten Druck bezeichnet werden.

Die Geometrie des Gasturbinentriebwerks 10 und Komponenten davon wird bzw. werden durch ein herkömmliches Achsensystem definiert, das eine axiale Richtung (die auf die Drehachse 9 ausgerichtet ist), eine radiale Richtung (in der Richtung von unten nach oben in Figur 1) und eine Umfangsrichtung (senkrecht zu der Ansicht in Figur 1) umfasst. Die axiale, die radiale und die Umfangsrichtung (Tangentialrichtung) verlaufen senkrecht zueinander.

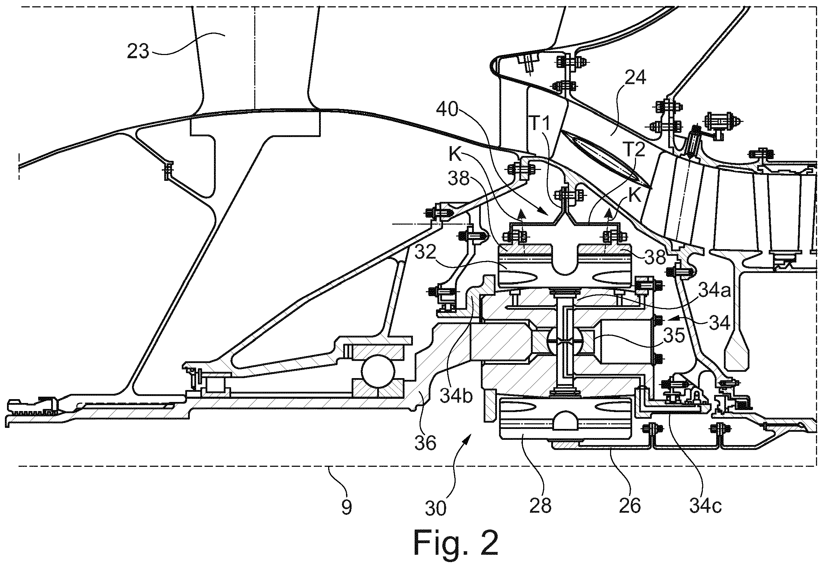

Eine beispielhafte Anordnung für ein Getriebe-Fan-Gasturbinentriebwerk 10 wird in Figur 2 gezeigt. Die Niederdruckturbine 19 (siehe Figur 1) treibt die Welle 26 an, die mit einem Sonnenrad 28 des epizyklischen Planetengetriebes 30 (oder im Allgemeinen eines Umlaufrädergetriebes) gekoppelt ist. Mehrere Planetenräder 32, die durch einen Planetenträger 34 miteinander gekoppelt sind, befinden sich von dem Sonnenrad 28 radial außen und kämmen damit. Der Planetenträger 34 führt die Planetenräder 32 so, dass sie synchron um das Sonnenrad 28 kreisen, während er ermöglicht, dass sich jedes Planetenrad 32 um seine eigene Achse drehen kann.

Der Planetenträger 34 umfasst vorliegend einen Lagerstift 34a, der durch eine vordere Planetenträgerplatte 34b und eine hintere Planetenträgerplatte 34c eingefasst ist. Der Planetenträger 34 ist mittels eines Kalottenlagers 35 und einer darin aufgenommenen sphärischen Lagereinheit (zum Ausgleich von Kippbewegungen) mit einem Gestänge 36 verbunden. Über das Gestänge 36 ist der Planetenträger 34 mit dem Fan 23 dahingehend gekoppelt, seine Drehung um die Triebwerksachse 9 anzutreiben. Das Gestänge 36 ist somit dazu ausgebildet, Drehmoment zu übertragen.

Ein Außenrad oder Hohlrad 38 befindet sich von den Planetenrädern 32 radial außen und kämmt damit. Vorliegend umfasst das Planetengetriebe 30 zwei Hohlräder 38. Jedes der beiden Hohlräder 38 befindet sich von den Planetenrädern 32 radial außen und kämmt damit, vorliegend mit zwei axial beabstandeten, verzahnten Abschnitten der einzelnen Planetenräder 32.

Die beiden Hohlräder 38 sind in axialer Richtung voneinander beabstandet. Die Hohlräder 38 sind über eine Halteeinrichtung 40 drehfest mit einer anderen Struktur, nämlich einer stationären Stützstruktur 24 des Gasturbinentriebwerks 10 gekoppelt. Die stationäre Stützstruktur 24 ist z.B. fest mit der Triebwerksgondel 21 verbunden. Die Halteeinrichtung 40 dient als Hohlradträger.

Das Planetengetriebe 30 und die Halteeinrichtung 40 bilden gemeinsam eine Getriebeanordnung.

Die Halteeinrichtung 40 ist z.B. ringförmig ausgebildet und umgibt die Hohlräder 38 an ihrem jeweiligen Außenumfang. Durch diese Ausgestaltung der Halteeinrichtung 40 sind die Hohlräder 38 in Umfangsrichtung um die Hauptdrehachse 9 nicht (oder nur unwesentlich) bewegbar, also wie bereits erwähnt drehfest an der stationären Stützstruktur 24 montiert. In Bezug auf die radiale und/oder axiale Richtung stellt die Halteeinrichtung 40 eine flexible Aufhängung der Hohlräder 38 bereit. Somit sind die Hohlräder 38 durch einwirkende Kräfte relativ zur stationären Stützstruktur 24 radial und/oder axial bewegbar. In radialer und/oder axialer Richtung sind die Hohlräder 38 relativ zur stationären Stützstruktur 24 wesentlich stärker bewegbar als in Umfangsrichtung. Hierdurch können Belastungen im Betrieb des Gasturbinentriebwerks 10 abgefangen werden, z.B. infolge von Lastwechseln oder einer thermischen Ausdehnung oder Kontraktion einzelner Bauteile. Das Planetengetriebe 30 ist durch die Halteeinrichtung 40 lastenentkoppelt.

Das Planetengetriebe 30 ist schräg verzahnt. Vorliegend sind die beiden Hohlräder 38 (und entsprechend die jeweils damit kämmenden Abschnitte der Planetenräder 32) in entgegengesetzter Richtung schräg verzahnt. Dabei sind die Zähne so ausgerichtet, dass sie sich während des Abrollens im Betrieb des Gasturbinentriebwerks 10 zuerst axial innenliegend berühren und der Zahnkontakt axial nach außen verläuft (nicht aufeinander zu). Hierdurch kann Schmieröl in einfacher Weise abgeführt werden.

Wie anhand von Figur 2 veranschaulicht, ist die Halteeinrichtung 40 vorliegend zweiteilig ausgeführt. An jedem der beiden Teile T1, T2 ist dabei eines der beiden Hohlräder 38 montiert. Hierzu ist an jedem der Hohlräder 38 ein außen umlaufender Flansch ausgebildet, der an einem Flansch eines Teils T1, T2 der Halteeinrichtung 40 befestigt, konkret damit verschraubt ist. Die beiden Teile T1, T2 der Halteeinrichtung 40 sind im gezeigten Beispiel baugleich ausgebildet (und spiegelverkehrt zueinander angeordnet). Beide Teile T1, T2 der Halteeinrichtung 40 sind mittels aneinander anliegenden Flanschen an einem Flansch der stationären Stützstruktur 24 montiert, konkret damit verschraubt.

Im Betrieb des Gasturbinentriebwerks 10 üben die Planetenräder 32 Kräfte auf die Hohlräder 38 aus, die aufgrund der schrägen Verzahnung eine axiale Komponente aufweisen. Die Richtungen der daraus folgenden Kraftvektoren K sind in Figur 2 mit gestrichelten Pfeilen veranschaulicht und weisen in axialer Richtung voneinander weg. Anhand von Figur 2 ist zu erkennen, dass jedes der beiden Teile der Halteeinrichtung 40 einen (ersten) Abschnitt aufweist, der (in der die Mittelachse des jeweiligen Hohlrades 38 umfassenden Querschnittsebene) in axialer Richtung (in Bezug auf die Mittelachse des Hohlrades 38, die hier mit der Hauptdrehachse 9 zusammenfällt) auf einer Seite des Kraftvektors K oder einer geraden Verlängerung davon angeordnet ist, und einen zweiten Abschnitt, der in der axialen Richtung auf der anderen Seite des Kraftvektors K oder der geraden Verlängerung davon angeordnet ist. Diese Ausbildung erlaubt eine besonders ausgeglichene Lagerung der Hohlräder 38.

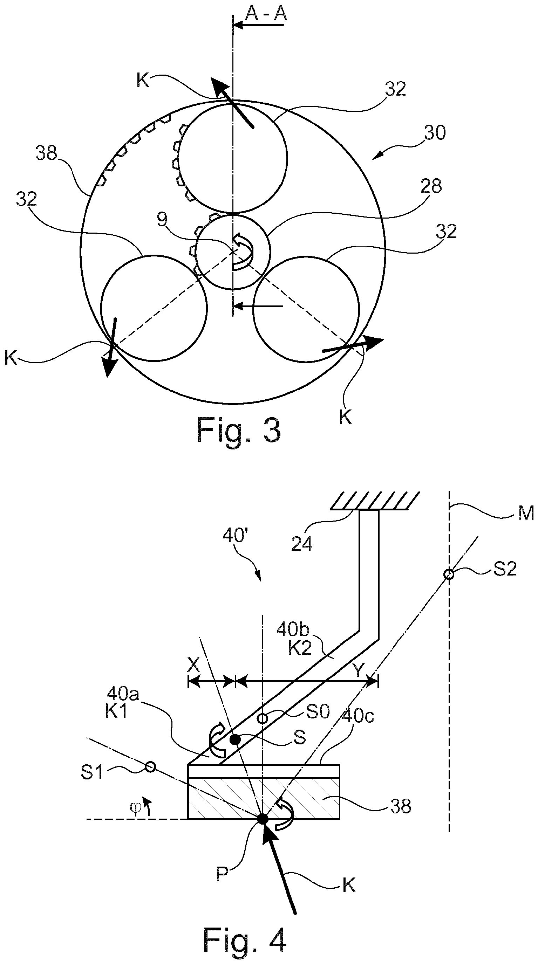

Das Planetengetriebe 30 wird in Figur 3 beispielhaft genauer gezeigt. Das Sonnenrad 28, die Planetenräder 32 und die Hohlräder 38 umfassen jeweils Zähne an ihrem Umfang, um ein Kämmen mit den anderen Zahnrädern zu ermöglichen. Jedoch werden der Übersichtlichkeit halber lediglich beispielhafte Abschnitte der Zähne in Figur 3 dargestellt. Obgleich drei Planetenräder 32 dargestellt werden, liegt für den Fachmann auf der Hand, dass innerhalb des Schutzumfangs der beanspruchten Erfindung auch eine andere Anzahl an Planetenrädern 32 vorgesehen sein kann, z.B. vier Planetenräder. Anwendungen eines epizylischen Planetengetriebes 30 umfassen allgemein mindestens drei Planetenräder 32.

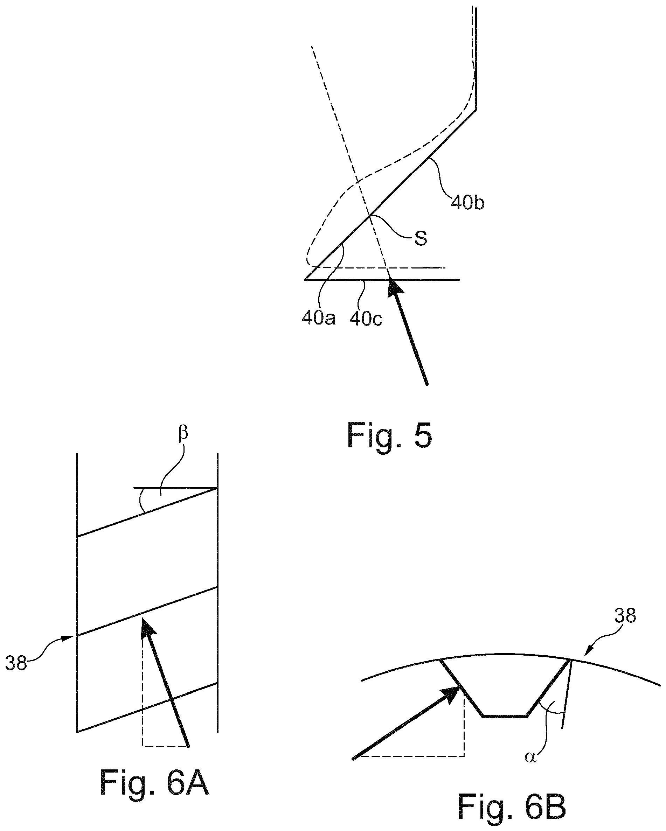

Auch die Kraftvektoren K der Planetenräder 32 auf das Hohlrad 38 sind in Figur 3 dargestellt. Aufgrund der Geometrie der schrägen Verzahnung, insbesondere des endlichen Schrägungswinkels β und Eingriffswinkels α (siehe insbesondere Figuren 6A und 6B), weisen die Kraftvektoren K eine radiale Komponente, eine axiale Komponente und eine Komponente in Umfangsrichtung auf. Die Richtung der Kraftvektoren K ist unabhängig vom Betrag des Drehmoments.

Figur 4 zeigt eine Ansicht gemäß dem Querschnitt A-A aus Figur 3, wobei lediglich das Hohlrad und eine Halteeinrichtung 40' (konkret eines von zwei Teilen der Halteeinrichtung 40') dargestellt sind.

Die Getriebeanordnung gemäß Figur 2 kann optional die Halteeinrichtung 40' gemäß Figur 4 umfassen.

Figur 4 zeigt den Kraftvektor K des Planetenrades 32 auf das Hohlrad 38 in der Projektion auf die (die Mittelachse enthaltende) Querschnittsebene, d.h. mit der radialen und der axialen Kraftkomponente, ohne der Tangentialkomponente.

Die Halteeinrichtung 40' gemäß Figur 4 umfasst einen ersten Abschnitt 40a, der sich (in der Querschnittsebene) in axialer Richtung auf einer Seite des Kraftvektors K und/oder seiner geradlinigen Verlängerung erstreckt, und einen zweiten Abschnitt 40b, der sich in axialer Richtung auf der anderen Seite des Kraftvektors K und/oder seiner geradlinigen Verlängerung erstreckt. Die Kraft des Planetenrades 32 wirkt auf einen Punkt P des Hohlrades 38, der in axialer Richtung mittig am Hohlrad 38 angeordnet ist. Am Punkt P steht das jeweilige Planetenrad 32 mit dem Hohlrad 38 in Eingriff. Hierbei wird als Kraftvektor K die Resultierende der gesamten, von einem Planetenrad 32 auf das Hohlrad 38 in einer Position einwirkenden Kräfte bezeichnet. Der resultierende Kraftvektor K wirkt somit in axialer Richtung mittig auf das Hohlrad 38.

Konkret ist der erste Abschnitt 40a in einer (durch die Mittelachse, entsprechend der Hauptdrehachse 9, und einen Radius aufgespannten) Querschnittsfläche des Hohlrades 38 auf einer Seite des auf die Querschnittsfläche projizierten Kraftvektors K (oder einer geraden Verlängerung davon) angeordnet, während der zweite Abschnitt 40b auf der anderen Seite des Kraftvektors K (oder der geraden Verlängerung davon) angeordnet ist.

Der auf die Querschnittsfläche projizierte Kraftvektor K (oder seine Verlängerung) schneidet die Halteeinrichtung 40' in einem Schnittpunkt S. Rollen die Planetenräder 32 am gesamten inneren Umfang des Hohlrades 38 ab, so beschreibt der Schnittpunkt S des mitlaufenden Kraftvektors K einen Ring. Der erste Abschnitt 40a der Halteeinrichtung 40' erstreckt sich auf der einen Seite des Schnittpunkts S (und des entsprechenden Rings). Der zweite Abschnitt 40b erstreckt sich auf der anderen Seite davon.

Ein Ringabschnitt 40c der Halteeinrichtung 40' umgreift das Hohlrad 38 und ist fest damit verbunden.

In Bezug auf die Mittelachse des Hohlrades 38 sind der erste und der zweite Abschnitt 40a, 40b zumindest abschnittsweise schräg ausgebildet. Der erste und der zweite Abschnitt 40a, 40b erstrecken sich im Wesentlichen über die gesamte Breite des Hohlrades 38 in axialer Richtung. Die Halteeinrichtung 40' ist in axialer Richtung an der einen Seite des Hohlrades 38 an der stationären Struktur monierbar und der erste Abschnitt 40a grenzt in axialer Richtung an der anderen Seite an das Hohlrad 38 an. Die Halteeinrichtung 40' übergreift das Hohlrad 38 somit zumindest annähernd.

Der erste Abschnitt 40a ist (im Querschnitt entlang der Mittelachse des Hohlrades 38) an seinem einen Ende mit dem Ringabschnitt 40c verbunden (optional einstückig damit ausgebildet, alternativ dazu daran montiert, z.B. über aneinander anliegende Flansche). An seinem anderen Ende ist der erste Abschnitt 40a mit einem Ende des zweiten Abschnitts 40b verbunden (wiederum optional einstückig damit ausgebildet, alternativ dazu daran montiert). Der zweite Abschnitt 40b ist an seinem anderen Ende mit der stationären Stützstruktur 24 verbunden (ebenfalls optional einstückig damit ausgebildet, alternativ dazu daran montiert). Mit anderen Worten gesagt ist das Hohlrad 38 insbesondere über den ersten Abschnitt 40a und den zweiten Abschnitt 40b (in dieser Reihenfolge) mit der stationären Stützstruktur 24 verbindbar. Optional ist das ganze Teil der Halteeinrichtung 40 (mit dem Ringabschnitt 40c, dem ersten und zweiten Abschnitt 40a, 40b) einstückig ausgebildet.

Der erste Abschnitt 40a und der zweite Abschnitt 40b sind flexibel (optional auch der Ringabschnitt 40c, insbesondere in radialer Richtung, was die Lastaufteilung zwischen den Planetenrädern 32 verbessern kann).

Es ist vorgesehen, dass der erste und der zweite Abschnitt 40a, 40b Drehsteifigkeiten K1, K2 aufweisen, deren Verhältnis 1,0 +/- 0,1 beträgt, insbesondere 1,0 +/- 0,05 (alternativ weisen der erste und der zweite Abschnitt 40a, 40b radiale Steifigkeiten mit diesen Verhältnissen auf). Im gezeigten Beispiel beträgt das Verhältnis 1,0. Hierdurch kann erreicht werden, dass trotz der schrägen Verzahnung die Kräfte der Planetenräder 32 nicht zu einem Verkippen des Hohlrades 38 führen, sondern dieses nur radial nach außen drängen. Das Hohlrad wird horizontal gehalten. Bei anderen, der Anmelderin aus der Praxis bekannten Halteeinrichtungen setzt sich die Verschiebung entsprechend dem Winkel des Kraftvektors aus radialen und axialen Komponente zusammen. Durch die gleichen oder im Wesentlichen gleichen Drehsteifigkeiten, insbesondere um eine zum Radius und zur Mittelachse des Hohlrades 38 senkrechte Achse, gleichen sich die elastischen Rotationen der beiden Abschnitte (in Figur 4 mittels Pfeilen veranschaulicht) gegenseitig aus. Ein Kippwinkel ϕ verschwindet oder ist vernachlässigbar klein (insbesondere lastunabhängig). Hierdurch kann die Zahnbeanspruchung verringert und eine erhöhte Robustheit und Zuverlässigkeit erreicht werden.

Der Schnittpunkt S ist vorliegend zwischen einer (in axialer Richtung gesehen) linken bzw. rechten, äußeren Kante der Halteeinrichtung 40' angeordnet. Von der linken Kante ist der Schnittpunkt in axialer Richtung um einen Abstand X beabstandet, von der rechten Kante um einen Abstand Y. Der Abstand X (zur linken äußeren Kante) ist kleiner als der Abstand Y (zur rechten äußeren Kante).

In Figur 4 sind ferner mehrere weitere mögliche Schnittpunkte S0, S1 und S2 eingezeichnet, die bei anders ausgebildeten Verzahnungen resultieren können. Dabei entspricht der Schnittpunkt S0 dem Schnittpunkt bei einer geraden Verzahnung, daher liegt der Schnittpunkt S0 in derselben axialen Ebene wie der Punkt P.

Der Schnittpunkt S1 resultiert bei einer (stark) schrägen Verzahnung und ist nicht zwischen den äußeren Kanten der Halteeinrichtung 40' angeordnet, sondern vor der linken Kante. Der Abstand des Schnittpunkts S1 zur rechten Kante ist somit größer als der Abstand der beiden äußeren Kanten zueinander. Die Halteeinrichtung wäre in dem Fall so geformt, dass sich der erste und der zweit Abschnitt 40a, 40b bis zu diesem Schnittpunkt S1 erstrecken.

Der Schnittpunkt S2 resultiert bei einer schrägen Verzahnung mit nach innen (zum zweiten Hohlrad 38) gerichtetem Kraftvektor. Die Verzahnung, insbesondere der Schrägungswinkel, ist so ausgebildet, und die Halteeinrichtung so ausgestaltet, dass der Schnittpunkt S2 in einer Mittelebene M liegt. Die Mittelebene M ist in der Mitte (in axialer Richtung) zwischen den beiden Hohlrädern 38 angeordnet und erstreckt sich senkrecht zur Mittelachse 9.

Figur 5 zeigt schematisch, wie der erste Abschnitt 40a und der zweite Abschnitt 40b der Halteeinrichtung 40 infolge der durch ein Planetenrad 32 ausgeübten Kraft (elastisch) verformt wird. Durch die gleichen Drehsteifigkeiten des ersten und des zweiten Abschnitts 40a, 40b wird der Ringabschnitt 40c im Querschnitt parallel verlagert, ohne gekippt zu werden.

Der erste Abschnitt 40a und der zweite Abschnitt 40b weisen im Querschnitt (in der Ebene des Radius und der Mittelachse) vorliegend unterschiedliche Längen auf. Um dieselben Drehsteifigkeiten zu erzielen, kann einer der Abschnitte (nämlich der kürzere erste Abschnitt 40a) z.B. aus einem weicheren Material, mit Schwächungen und/oder mit einer geringeren Materialstärke ausgebildet sein im Vergleich mit dem anderen der Abschnitte. Vorliegend weist der erste Abschnitt 40a eine geringere Materialstärke auf als der zweite Abschnitt 40b (siehe Figur 4).

Die Drehsteifigkeiten können z.B. gemessen werden, indem das Ende des jeweiligen Abschnitts 40a, 40b festgehalten wird, das dem anderen Abschnitt 40a, 40b abgewandt ist, ein Drehmoment auf den Schnittpunkt S ausgeübt wird und die Auslenkung ermittelt wird. Dies kann optional mit einem radial ausgeschnittenen Stück der Halteeinrichtung 40' erfolgen.

Optional sind ein oder mehrere Durchgangslöcher im ersten und/oder zweiten Abschnitt 40a, 40b ausgebildet, um Schmieröl passieren zu lassen.

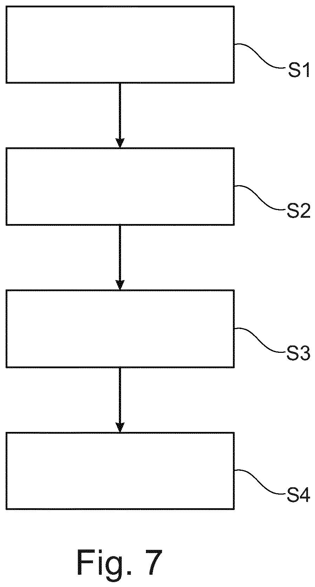

Figur 7 zeigt ein Verfahren zur Herstellung einer Getriebeanordnung, insbesondere einer Getriebeanordnung wie vorstehend beschriebenen. Die Schritte können, müssen aber nicht in der nachstehend angegebenen Reihenfolge durchgeführt werden.

In einem Schritt S1 wird ein Planetengetriebe 30 mit zwei Hohlrädern 38 und mehreren Planetenrädern 32 bereitgestellt, wobei die Planetenräder 32 beim Abrollen am Hohlrad 38 eine Kraft in Richtung jeweils eines Kraftvektors K auf jedes Hohlrad ausüben. Der Kraftvektor K stellt dabei die Resultierende der Kräfte dar, die das jeweilige Planetenrad 32 in einer Stellung auf das jeweilige Hohlrad 38 ausübt.

In einem Schritt S2 werden eine Geometrie (insbesondere eine Materialstärke) und/oder Materialeigenschaften (insbesondere die Materialwahl, z.B. Stahl) jeweils eines ersten und eines zweiten Abschnitts 40a, 40b einer Halteeinrichtung 40; 40' zur Befestigung der Hohlräder 38 an einer stationären Stützstruktur 24 in einer Optimierungsprozedur ermittelt. Hierzu werden einer oder mehrere der genannten Parameter mit dem Ziel variiert, möglichst gleiche Drehsteifigkeiten für den ersten und den zweiten Abschnitt 40a, 40b zu erzielen.

Dabei werden der erste und der zweite Abschnitt 40a, 40b dadurch definiert, dass sie in axialer Richtung auf gegenüberliegenden Seiten des (umlaufenden) Kraftvektors K liegen. In Bezug auf einen radialen Querschnitt werden der erste und der zweite Abschnitt 40a, 40b durch die in axialer Richtung gegenüberliegenden Seiten des aus der Axialkomponente und der Radialkomponente des Kraftvektors K gebildeten Vektors und dessen geradlinigen Verlängerung definiert.

Rollen die Planetenräder 32 einmal am Innenumfang der Hohlräder 38 ab, dann beschreiben der mitlaufende Kraftvektor K und dessen geradlinige Verlängerung (je Hohlrad 38) einen Kegel, konkret einen geraden Kreiskegel. Dieser Kegel beschreibt den Übergang zwischen dem ersten Abschnitt 40a und dem zweiten Abschnitt 40b.

Optional umfasst die Optimierungsprozedur einen FEM-Algorithmus und/oder erfolgt iterativ.

In einem Schritt S3 wird die Halteeinrichtung 40; 40' gemäß der ermittelten Geometrie ausgebildet.

In einem Schritt S4 wird die Halteeinrichtung 40; 40' an den Hohlrädern 38 montiert, und zwar derart, dass (je Hohlrad 38) die jeweiligen ersten und zweiten Abschnitte 40a, 40b der Halteeinrichtung 40; 40' in axialer Richtung auf gegenüberliegenden Seiten des Kraftvektors K und/oder seiner geraden Verlängerung angeordnet sind, insbesondere ausschließlich. Die Getriebeanordnung kann an einem Gasturbinentriebwerk (z.B. dem Gasturbinentriebwerk gemäß Figur 1) montiert werden.

Das in Figur 2 und 3 beispielhaft dargestellte epizyklische Planetengetriebe 30 ist ein Planetengetriebe, bei dem der Planetenträger 34 über das Gestänge 36 mit einer Ausgangswelle gekoppelt ist, wobei das Hohlrad 38 festgelegt ist. Jedoch kann eine beliebige andere geeignete Art von Planetengetriebe 30 verwendet werden. Als ein weiteres Beispiel kann das Planetengetriebe 30 eine Sternanordnung sein, bei der der Planetenträger 34 festgelegt gehalten wird, wobei gestattet wird, dass sich das Hohlrad (oder Außenrad) 38 dreht. Bei solch einer Anordnung wird der Fan 23 von dem Hohlrad 38 angetrieben. Als ein weiteres alternatives Beispiel kann das Getriebe 30 ein Differenzialgetriebe sein, bei dem gestattet wird, dass sich sowohl das Hohlrad 38 als auch der Planetenträger 34 drehen.

Es versteht sich, dass die in Figur 2 und 3 gezeigte Anordnung lediglich beispielhaft ist und verschiedene Alternativen in dem Schutzumfang der vorliegenden Offenbarung liegen. Lediglich beispielhaft kann eine beliebige geeignete Anordnung zur Positionierung des Planetengetriebes 30 in dem Gasturbinentriebwerk 10 und/oder zur Verbindung des Planetengetriebes 30 mit dem Gasturbinentriebwerk 10 verwendet werden. Als ein weiteres Beispiel können die Verbindungen (z. B. das Gestänge 36 in dem Beispiel von Figur 2) zwischen dem Getriebe 30 und anderen Teilen des Gasturbinentriebwerks 10 (wie z. B. der Eingangswelle 26, der Ausgangswelle und/oder der stationären Struktur 24) einen gewissen Grad an Steifigkeit oder Flexibilität aufweisen. Als ein weiteres Beispiel kann eine beliebige geeignete Anordnung der Lager zwischen rotierenden und stationären Teilen des Gasturbinentriebwerks 10 (beispielsweise zwischen der Eingangs- und der Ausgangswelle des Planetengetriebes und den festgelegten Strukturen, wie z. B. dem Getriebegehäuse) verwendet werden, und die Offenbarung ist nicht auf die beispielhafte Anordnung von Figur 2 beschränkt. Entsprechend dehnt sich die vorliegende Offenbarung auf ein Triebwerk, insbesondere ein Gasturbinentriebwerk, mit einer beliebigen Anordnung der Getriebearten (beispielsweise sternförmig oder epizyklisch planetenartig), Stützstrukturen, Eingangs- und Ausgangswellenanordnung und Lagerpositionierungen aus.

Optional kann das Planetengetriebe 30 Neben- und/oder alternative Komponenten (z. B. den Mitteldruckverdichter und/oder einen Nachverdichter) antreiben.

Andere Gasturbinentriebwerke, bei denen die vorliegende Offenbarung Anwendung finden kann, können alternative Konfigurationen aufweisen. Beispielsweise können derartige Triebwerke eine alternative Anzahl an Verdichtern und/oder Turbinen und/oder eine alternative Anzahl an Verbindungswellen aufweisen. Als ein weiteres Beispiel weist das in Figur 1 gezeigte Gasturbinentriebwerk eine Teilungsstromdüse 20, 22 auf, was bedeutet, dass der Strom durch den Bypasskanal 22 seine eigene Düse aufweist, die von der Triebwerkskerndüse 20 separat und davon radial außen ist. Jedoch ist dies nicht einschränkend und ein beliebiger Aspekt der vorliegenden Offenbarung kann auch auf Triebwerke zutreffen, bei denen der Strom durch den Bypasskanal 22 und der Strom durch den Kern 11 vor (oder stromaufwärts) einer einzigen Düse, die als eine Mischstromdüse bezeichnet werden kann, vermischt oder kombiniert werden. Eine oder beide Düsen (ob Misch- oder Teilungsstrom) kann einen festgelegten oder variablen Bereich aufweisen. Obgleich sich das beschriebene Beispiel auf ein Turbofantriebwerk bezieht, kann die Offenbarung beispielsweise bei einer beliebigen Art von Gasturbinentriebwerk, wie z. B. bei einem Open-Rotor- (bei dem die Fanstufe nicht von einer Triebwerksgondel umgeben wird) oder einem Turboprop-Triebwerk, angewendet werden.

Es versteht sich, dass die Erfindung nicht auf die oben beschriebenen Ausführungsformen beschränkt ist und verschiedene Modifikationen und Verbesserungen vorgenommen werden können.

### Bezugszeichenliste

- 9: Hauptdrehachse und Mittelachse Hohlrad
- 10: Gasturbinentriebwerk
- 11: Kerntriebwerk
- 12: Lufteinlass
- 14: Niederdruckverdichter
- 15: Hochdruckverdichter
- 16: Verbrennungseinrichtung
- 17: Hochdruckturbine
- 18: Bypassschubdüse
- 19: Niederdruckturbine
- 20: Kernschubdüse
- 21: Triebwerksgondel
- 22: Bypasskanal
- 23: Fan
- 24: stationäre Stützstruktur
- 26: Welle
- 27: Verbindungswelle
- 28: Sonnenrad
- 30: Planetengetriebe
- 32: Planetenrad
- 34: Planetenträger
- 34a: Lagerstift
- 34b: vordere Planetenträgerplatte
- 34c: hintere Planetenträgerplatte
- 35: Kalottenlager
- 36: Gestänge
- 38: Hohlrad
- 40; 40': Halteeinrichtung
- 40a: erster Abschnitt
- 40b: zweiter Abschnitt
- 40c: Ringabschnitt
- A: Kernluftstrom
- B: Bypassluftstrom
- K: Kraftvektor
- M: Mittelebene
- P: Punkt
- S, S0-S2: Schnittpunkt
- T1, T2: Teil der Halteeinrichtung
- X, Y: Abstand

## Patentansprüche

1. Getriebeanordnung für ein Gasturbinentriebwerk (10), umfassend:
- ein Planetengetriebe (30) mit zumindest einem Hohlrad (38) und zumindest einem Planetenrad (32), das beim Abrollen am Hohlrad (38) darauf eine Kraft in Richtung eines Kraftvektors (K) ausübt; und
- eine Halteeinrichtung (40; 40') zur Befestigung des zumindest einen Hohlrades (38) an einer anderen Struktur (24), mit einem ersten Abschnitt (40a), der sich in axialer Richtung auf einer Seite des Kraftvektors (K) und/oder einer geraden Verlängerung davon erstreckt, und mit einem zweiten Abschnitt (40b), der sich in axialer Richtung auf der anderen Seite des Kraftvektors (K) und/oder der geraden Verlängerung davon erstreckt,
**dadurch gekennzeichnet, dass**
der erste Abschnitt (40a) ein Ende aufweist, an dem der erste Abschnitt (40a) mit einem Ende des zweiten Abschnitts (40b) verbunden ist, sodass der erste Abschnitt (40a) das zumindest eine Hohlrad (38) mit dem zweiten Abschnitt (40b) verbindet und über den zweiten Abschnitt (40b) mit der anderen Struktur (24) verbunden oder verbindbar ist, wobei der erste und der zweite Abschnitt (40a, 40b) jeweils eine Drehsteifigkeit (K1, K2) aufweist, wobei das Verhältnis dieser Drehsteifigkeiten 1,0 +/- 0,1 beträgt.

2. Getriebeanordnung nach Anspruch 1, wobei das Verhältnis dieser Drehsteifigkeiten 1,0 +/- 0,05 beträgt.

3. Getriebeanordnung nach einem der vorhergehenden Ansprüche, wobei das Planetengetriebe (30) eine Schrägverzahnung aufweist, insbesondere eine doppelte Schrägverzahnung.

4. Getriebeanordnung nach Anspruch 3, wobei das Planetengetriebe (30) zwei Hohlräder (38) aufweist und derart doppelt schrägverzahnt ist, dass Axialkräfte beim Abrollen des zumindest einen Planetenrades (32) an den Hohlrädern (38) voneinander weg gerichtet sind.

5. Getriebeanordnung nach einem der vorhergehenden Ansprüche, wobei die Halteeinrichtung (40; 40') eine flexible Aufhängung des Hohlrades (38) bereitstellt.

6. Getriebeanordnung nach einem der vorhergehenden Ansprüche, wobei der erste und der zweite Abschnitt (40a, 40b) einstückig miteinander ausgebildet sind.

7. Getriebeanordnung nach einem der vorhergehenden Ansprüche, wobei der erste und der zweite Abschnitt (40a, 40b) unterschiedliche Materialstärken aufweisen.

8. Triebwerk, insbesondere für ein Luftfahrzeug, umfassend:
- eine Kernwelle (26);
- einen Fan (23) mit mehreren Fanschaufeln; und
- zumindest eine Getriebeanordnung nach einem der vorhergehenden Ansprüche mit einem Planetengetriebe (30), das von der Kernwelle (26) antreibbar ist, wobei der Fan (23) mittels des Planetengetriebes (30) mit einer niedrigeren Drehzahl als die Kernwelle (26) antreibbar ist.

9. Gasturbinentriebwerk (10) für ein Luftfahrzeug, umfassend:
- ein Kerntriebwerk (11), das eine Turbine (19), einen Verdichter (14) und eine die Turbine mit dem Verdichter verbindende Kernwelle (26) umfasst;
- einen Fan (23), der stromaufwärts des Kerntriebwerks (11) positioniert ist, wobei der Fan (23) mehrere Fanschaufeln umfasst; und
- zumindest eine Getriebeanordnung nach einem der Ansprüche 1 bis 7 mit einem Planetengetriebe (30), das von der Kernwelle (26) antreibbar ist, wobei der Fan (23) mittels des Planetengetriebes (30) mit einer niedrigeren Drehzahl als die Kernwelle (26) antreibbar ist.

10. Gasturbinentriebwerk (10) nach Anspruch 9, wobei:
- die Turbine eine erste Turbine (19) ist, der Verdichter ein erster Verdichter (14) ist und die Kernwelle eine erste Kernwelle (26) ist;
- das Kerntriebwerk (11) ferner eine zweite Turbine (17), einen zweiten Verdichter (15) und eine zweite Kernwelle (27), die die zweite Turbine mit dem zweiten Verdichter verbindet, umfasst; und
- die zweite Turbine, der zweite Verdichter und die zweite Kernwelle dahingehend angeordnet sind, sich mit einer höheren Drehzahl als die erste Kernwelle zu drehen.

11. Verfahren zur Herstellung einer Getriebeanordnung, insbesondere nach einem der Ansprüche 1 bis 8, umfassend die folgenden Schritte:
- Bereitstellen (S1) eines Planetengetriebes (30) mit zumindest einem Hohlrad (38) und zumindest einem Planetenrad (32), das beim Abrollen am Hohlrad (38) darauf eine Kraft in Richtung eines Kraftvektors (K) ausübt; und
- Montieren (S4) einer Halteeinrichtung (40; 40') zur Befestigung des zumindest einen Hohlrades (38) an einer anderen Struktur (24) derart am zumindest einen Hohlrad (38), dass sich ein erster Abschnitt (40a) der Halteeinrichtung (40; 40') in axialer Richtung auf einer Seite des Kraftvektors (K) und/oder einer geraden Verlängerung davon erstreckt, und ein zweiter Abschnitt (40b) der Halteeinrichtung (40; 40') sich in axialer Richtung auf der anderen Seite des Kraftvektors (K) und/oder der geraden Verlängerung davon erstreckt,
**dadurch gekennzeichnet, dass** der erste Abschnitt (40a) ein Ende aufweist, an dem der erste Abschnitt (40a) mit einem Ende des zweiten Abschnitts (40b) verbunden ist, sodass der erste Abschnitt (40a) das zumindest eine Hohlrad (38) mit dem zweiten Abschnitt (40b) verbindet und über den zweiten Abschnitt (40b) mit der anderen Struktur (24) verbunden oder verbindbar ist, wobei der erste und der zweite Abschnitt (40a, 40b) jeweils eine Drehsteifigkeit (K1, K2) aufweist, wobei das Verhältnis dieser Drehsteifigkeiten 1,0 +/- 0,1 beträgt.

12. Verfahren nach Anspruch 11, ferner umfassend folgenden Schritt:
- Ermitteln (S2) einer Geometrie und/oder von Materialeigenschaften des ersten und des zweiten Abschnitts (40a, 40b) der Halteeinrichtung (40; 40') in einer Optimierungsprozedur.

13. Verfahren nach Anspruch 12, wobei die Optimierungsprozedur einen FEM-Algorithmus umfasst.

14. Verfahren nach Anspruch 12 oder 13, wobei die Optimierungsprozedur iterativ erfolgt.

## Claims

1. Gear assembly for a gas turbine engine (10), comprising:
- a planetary gear unit (30) with at least one ring gear (38) and at least one planetary gear (32) which, when rolling on the ring gear (38), exerts a force on the latter in the direction of a force vector (K); and
- a holding device (40; 40') for fastening the at least one ring gear (38) to another structure (24), with a first portion (40a) which extends in the axial direction on one side of the force vector (K) and/or a straight extension of the latter, and with a second portion (40b) which extends in the axial direction on the other side of the force vector (K) and/or the straight extension of the latter,
**characterized in that**
the first portion (40a) has an end, at which the first portion (40a) is connected to an end of the second portion (40b), with the result that the first portion (40a) connects the at least one ring gear (38) to the second portion (40b), and is connected or can be connected via the second portion (40b) to the other structure (24), the first and the second portion (40a, 40b) each having a torsional rigidity (K1, K2), the ratio of these torsional rigidities being 1.0 ±0.1.

2. Gear assembly according to Claim 1, the ratio of these torsional rigidities being 1.0 ±0.05.

3. Gear assembly according to either of the preceding claims, the planetary gear unit (30) having a helical toothing system, in particular a double helical toothing system.

4. Gear assembly according to Claim 3, the planetary gear unit (30) having two ring gears (38) and being double helically toothed in such a way that axial forces are directed away from one another when the at least one planetary gear (32) rolls on the ring gears (38).

5. Gear assembly according to one of the preceding claims, the holding device (40; 40') providing flexible mounting of the ring gear (38).

6. Gear assembly according to one of the preceding claims, the first and the second portion (40a, 40b) being configured in one piece with one another.

7. Gear assembly according to one of the preceding claims, the first and the second portion (40a, 40b) having different material thicknesses.

8. Engine, in particular for an aircraft, comprising:
- a core shaft (26);
- a fan (23) with a plurality of fan blades; and
- at least one gear assembly according to one of the preceding claims with a planetary gear unit (30) which can be driven by the core shaft (26), it being possible for the fan (23) to be driven by means of the planetary gear unit (30) at a lower rotational speed than the core shaft (26).

9. Gas turbine engine (10) for an aircraft, comprising:
- a core engine (11) which comprises a turbine (19), a compressor (14) and a core shaft (26) which connects the turbine to the compressor;
- a fan (23) which is positioned upstream of the core engine (11), the fan (23) comprising a plurality of fan blades; and
- at least one gear assembly according to one of Claims 1 to 7 with a planetary gear unit (30) which can be driven by the core shaft (26), it being possible for the fan (23) to be driven by means of the planetary gear unit (30) at a lower rotational speed than the core shaft (26).

10. Gas turbine engine (10) according to Claim 9:
- the turbine being a first turbine (19), the compressor being a first compressor (14) and the core shaft being a first core shaft (26);
- the core engine (11) comprising, furthermore, a second turbine (17), a second compressor (15) and a second core shaft (27) which connects the second turbine to the second compressor; and
- the second turbine, the second compressor and the second core shaft being arranged so as to rotate at a higher rotational speed than the first core shaft.

11. Method for producing a gear assembly, in particular according to one of Claims 1 to 8, comprising the following steps:
- providing (S1) a planetary gear unit (30) with at least one ring gear (38) and at least one planetary gear (32) which, when rolling on the ring gear (38), exerts a force in the direction of a force vector (K) on the latter; and
- mounting (S4) a holding device (40; 40') for fastening the at least one ring gear (38) to another structure (24) in such a way on the at least one ring gear (38) that a first portion (40a) of the holding device (40; 40') extends in the axial direction on a side of the force vector (K) and/or a straight extension of the latter, and a second portion (40b) of the holding device (40; 40') extends in the axial direction on the other side of the force vector (K) and/or the straight extension of the latter,
**characterized in that** the first portion (40a) has an end, at which the first portion (40a) is connected to an end of the second portion (40b), with the result that the first portion (40a) connects the at least one ring gear (38) to the second portion (40b), and is connected or can be connected via the second portion (40b) to the other structure (24), the first and the second portion (40a, 40b) each having a torsional rigidity (K1, K2), the ratio of these torsional rigidities being 1.0 ±0.1.

12. Method according to Claim 11, comprising, furthermore, the following step:
- determining (S2) a geometry and/or material properties of the first and the second portion (40a, 40b) of the holding device (40; 40') in an optimization procedure.

13. Method according to Claim 12, the optimization procedure comprising an FEM algorithm.

14. Method according to Claim 12 or 13, the optimization procedure taking place iteratively.

## Revendications

1. Agencement d'engrenage pour un moteur à turbine à gaz (10), comprenant :
- un engrenage planétaire (30) avec au moins une couronne (38) et au moins un satellite (32) qui, lorsqu'il roule sur la couronne (38), exerce sur celle-ci une force en direction d'un vecteur de force (K) ; et
- un dispositif de retenue (40 ; 40') pour fixer l'au moins une couronne (38) à une autre structure (24), avec une première section (40a) qui s'étend en direction axiale d'un côté du vecteur de force (K) et/ou d'un prolongement rectiligne de celui-ci, et une deuxième section (40b) qui s'étend en direction axiale de l'autre côté du vecteur de force (K) et/ou du prolongement rectiligne de celui-ci,
**caractérisé en ce que**
la première section (40a) présente une extrémité à laquelle la première section (40a) est reliée à une extrémité de la deuxième section (40b), de telle sorte que la première section (40a) relie l'au moins une couronne (38) à la deuxième section (40b) et est reliée ou peut être reliée à l'autre structure (24) par l'intermédiaire de la deuxième section (40b), la première et la deuxième section (40a, 40b) présentant chacune une rigidité en torsion (K1, K2), le rapport de ces rigidités en torsion étant de 1,0 +/- 0,1.

2. Agencement d'engrenage selon la revendication 1, dans lequel le rapport de ces rigidités en torsion est de 1,0 +/- 0,05.

3. Agencement d'engrenage selon l'une quelconque des revendications précédentes, dans lequel l'engrenage planétaire (30) présente une denture hélicoïdale, notamment une double denture hélicoïdale.

4. Agencement d'engrenage selon la revendication 3, dans lequel l'engrenage planétaire (30) présente deux couronnes (38) et est doté d'une double denture hélicoïdale de telle sorte que les forces axiales sont dirigées à l'écart l'une de l'autre lors du roulement de l'au moins un satellite (32) sur les couronnes (38).

5. Agencement d'engrenage selon l'une quelconque des revendications précédentes, dans lequel le dispositif de retenue (40 ; 40') fournit une suspension flexible de la couronne (38).

6. Agencement d'engrenage selon l'une quelconque des revendications précédentes, dans lequel la première et la deuxième section (40a, 40b) sont réalisées d'un seul tenant l'une avec l'autre.

7. Agencement d'engrenage selon l'une quelconque des revendications précédentes, dans lequel la première et la deuxième section (40a, 40b) présentent des épaisseurs de matériau différentes.

8. Moteur, notamment pour un aéronef, comprenant :
- un arbre central (26) ;
- une soufflante (23) avec plusieurs aubes de soufflante ; et
- au moins un agencement d'engrenage selon l'une quelconque des revendications précédentes, avec un engrenage planétaire (30) pouvant être entraîné par l'arbre central (26), la soufflante (23) pouvant être entraînée à une vitesse de rotation inférieure à celle de l'arbre central (26) au moyen de l'engrenage planétaire (30) .

9. Moteur à turbine à gaz (10) pour un aéronef, comprenant :
- un moteur central (11) comprenant une turbine (19), un compresseur (14) et un arbre central (26) reliant la turbine au compresseur ;
- une soufflante (23) positionnée en amont du moteur central (11), la soufflante (23) comprenant plusieurs aubes de soufflante ; et
- au moins un agencement d'engrenage selon l'une quelconque des revendications 1 à 7, avec un engrenage planétaire (30) pouvant être entraîné par l'arbre central (26), la soufflante (23) pouvant être entraînée à une vitesse de rotation inférieure à celle de l'arbre central (26) au moyen de l'engrenage planétaire (30).

10. Moteur à turbine à gaz (10) selon la revendication 9, dans lequel :
- la turbine est une première turbine (19), le compresseur est un premier compresseur (14) et l'arbre central est un premier arbre central (26) ;
- le moteur central (11) comprend en outre une deuxième turbine (17), un deuxième compresseur (15) et un deuxième arbre central (27) reliant la deuxième turbine au deuxième compresseur ; et
- la deuxième turbine, le deuxième compresseur et le deuxième arbre central sont agencés pour tourner à une vitesse de rotation supérieure à celle du premier arbre central.

11. Procédé de fabrication d'un agencement d'engrenage, notamment selon l'une quelconque des revendications 1 à 8, comprenant les étapes suivantes :
- la fourniture (31) d'un engrenage planétaire (30) avec au moins une couronne (38) et au moins un satellite (32) qui, lorsqu'il roule sur la couronne (38), exerce sur celle-ci une force en direction d'un vecteur de force (K) ; et
- le montage (S4) d'un dispositif de retenue (40 ; 40') pour fixer l'au moins une roue creuse (38) à une autre structure (24) de telle sorte sur l'au moins une roue creuse (38) qu'une première section (40a) du dispositif de retenue (40 ; 40') s'étend en direction axiale d'un côté du vecteur de force (K) et/ou d'un prolongement rectiligne de celui-ci, et une deuxième section (40b) du dispositif de retenue (40 ; 40') s'étend en direction axiale de l'autre côté du vecteur de force (K) et/ou du prolongement rectiligne de celui-ci,
**caractérisé en ce que** la première section (40a) présente une extrémité à laquelle la première section (40a) est reliée à une extrémité de la deuxième section (40b), de telle sorte que la première section (40a) relie l'au moins une couronne (38) à la deuxième section (40b) et est reliée ou peut être reliée à l'autre structure (24) par l'intermédiaire de la deuxième section (40b), la première et la deuxième section (40a, 40b) présentant chacune une rigidité en torsion (K1, K2), le rapport entre ces rigidités en torsion étant de 1,0 +/- 0,1.

12. Procédé selon la revendication 11, comprenant en outre l'étape suivante :
- la détermination (32) d'une géométrie et/ou de propriétés de matériau de la première et de la deuxième sections (40a, 40b) du dispositif de retenue (40 ; 40') dans une procédure d'optimisation.

13. Procédé selon la revendication 12, dans lequel la procédure d'optimisation comprend un algorithme FEM.

14. Procédé selon la revendication 12 ou 13, dans lequel la procédure d'optimisation est effectuée de manière itérative.
